Europäisches Patentamt

European Patent Office

Office européen des brevets

(11) Numéro de publication: **0 064 928**

**A1**

(12) ## DEMANDE DE BREVET EUROPEEN

(21) Numéro de dépôt: **82400842.9**

(22) Date de dépôt: **07.05.82**

(51) Int. Cl.³: **A 47 B 81/06**
**H 04 N 5/64**

(30) Priorité: **11.05.81 FR 8109566**

(43) Date de publication de la demande:
**17.11.82 Bulletin 82/46**

(84) Etats contractants désignés:
**AT BE CH DE GB IT LI LU NL SE**

(71) Demandeur: **Revelin, Bernard**
**Le Bois Randenais Brugheas**
**F-03110 Escurolles(FR)**

(72) Inventeur: **Revelin, Bernard**
**Le Bois Randenais Brugheas**
**F-03110 Escurolles(FR)**

(74) Mandataire: **Chanet, Jacques**
**B.P.27 95bis avenue de Royat**
**F-63400 Chamalieres(FR)**

(54) Habillage de postes de télévision composé de quatre panneaux assemblés.

(57) La présente invention a pour objet un dispositif destiné à l'agrémentation des postes de télévision.

Un tel dispositif ou meuble d'habillage est composé d'un panneau avant 1 conformé en lucarnes dont une pour laisser apparaître l'écran et une seconde éventuellement pour l'accès aux moyens de réglage, deux panneaux latéraux 2 et 2' et un panneau supérieur 3.

Application aux habillages de postes de télévision pouvant s'harmoniser avec les styles des mobiliers dans lesquels ils sont intégrés.

_ Fig. 1 _

EP 0 064 928 A1

1

La présente invention est du domaine de l'ameublement et elle a pour objet un dispositif destiné à l'agrémentation des postes de télévision.

On rappelle qu'un poste de télévision est essentiellement constitué d'un boîtier comportant sur sa face avant un écran cathodique et contenant les divers organes éléctroniques nécessaires à la production des images et du son. On sait aussi que par souci de standardisation et pour ne déplaire au plus petit nombre possible d'acheteurs. Le boîtier est généralement d'une forme la plus simple et la plus discréte possible ; or, une telle simplicité des lignes n'est pas toujours en harmonie avec des aménagements intérieurs de style ancien ou rustique et il est souvent frappant de constater combien les lignes fonctionnelles des téléviseurs détonnent au milieu de meubles de style ancien.

La présente invention a pour objet de proposer un habillage des postes de télévision grâce auquel ils pourront mieux s'harmoniser avec des aménagements de style, étant entendu que la définition qui sera donnée de cet habillage ne concerne que la structure générale de celui-ci et que les détails décoratifs relèveront, cas par cas, de l'activité du dessinateur ou du modéliste.

Selon la présente invention, un habillage de poste de télévision est principalement caractérisé en ce qu'il se compose de quatre panneaux à savoir : un panneau avant, deux panneaux latéraux et un panneau supérieur, le panneau avant étant conformé en lucarne pour laisser apparaître l'écran du téléviseur.

L'habillage ainsi constitué est donc un parallélépipède matérialisé sur quatre de ses faces ; un tel habillage peut donc, à condition que ses dimensions intérieures correspondent aux dimensions extérieures du téléviseur, être posé très simplement sur ce dernier.

Outre l'effet décoratif résultant de la modélisation suivant tel ou tel style de la face avant notamment, il a été constaté de façon surprenante un effet "d'approfondissement" de l'image, voisin d'un effet de relief, qui semble être dû au fait que la face avant de l'habillage

2

déborde en avant de l'écran.

La présente invention sera mieux comprise à la description qui va être faite d'une forme particulière de réalisation en relation avec les figures de la planche unique annexée dans laquelle :

- la fig. 1 est une représentation en perspective d'un habillage conforme à l'invention et,

- la fig. 2 est une représentation analogue mais "éclatée" du même.

Sur les figures un habillage conforme à l'invention destiné à un téléviseur est constitué limitativement d'une face avant 1, de deux faces latérales 2 et 2' et d'une face supérieure 3.

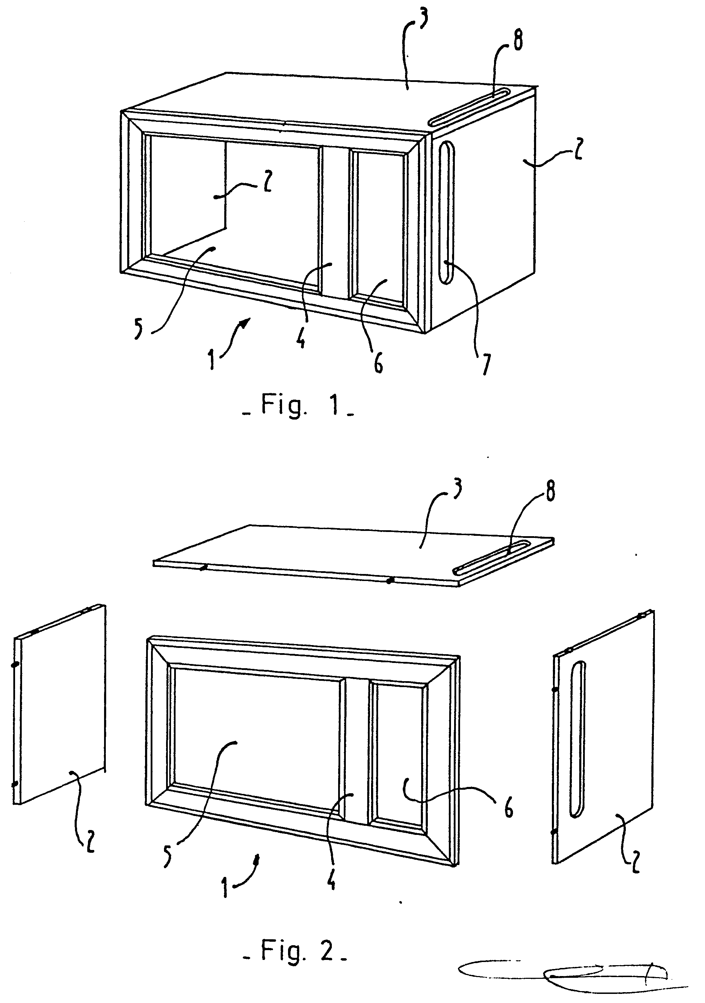

Ces faces sont assemblées tel que cela est visible en fig. 1 suivant trois faces adjacentes d'un parallélogramme, selon les techniques habituelles de la menuiserie ou de l'ébénisterie.

La face avant de l'habillage qui est la face dont la stylisation sera la plus apparente a, en fait, une structure de cadre comportant une lucarne principale 5 destinée à permettre la vision de l'écran du téléviseur placé derrière elle et éventuellement une seconde lucarne 6 destinée à permettre l'accès aux moyens de réglage du téléviseur ; les lucarnes 5 et 6 sont dans le cas de la figure séparées par un montant 4.

Accessoirement, des ouvertures telles que 7 et 8 peuvent être aménagées sur les faces latérales ou supérieures pour permettre l'accès aux moyens de réglage si le téléviseur en comporte sur son côté supérieur ou sur ses côtés latéraux.

Bien que l'exemple illustré sur les figures ait été choisi pour la commodité des dessins avec des lignes simples, on doit comprendre que les contours des lucarnes peuvent être chantournés en volutes, en coquilles, etc. qu'aussi bien le montant 4 qui est sur les figures une pièce rectiligne dans le plan de la face avant, pourrait être un ensemble de colonnettes ou tout autre motif décoratif ayant les dimensions générales du montant 4.

Accessoirement aussi, les faces 2, 2' et 3 pourraient être elles aussi des pièces comportant des motifs décoratifs.

L'emplacement des panneaux de même que leur forme et leurs dégagements, ne sont pas impératifs et dépendent uniquement de la forme et des emplacements des éléments techniques du téléviseur à habiller. On pourra ainsi aménager avantageusement des portes ouvrantes et évidées, dont l'évidement garni d'une toile de haut parleur permet l'utilisation de la technique de télécommande à distance, tout en cachant les boutons de commande. Les panneaux de ce meubles sont démontables entre eux pour en faciliter le transport ; le meuble assemblé s'emboite sans fixation sur le téléviseur et sans déplacer ce dernier ; il a l'avantage de n'avoir qu'un faible encombrement supplémentaire, à savoir l'épaisseur des panneaux ainsi que du décor de façade ; les décors des côtés et du dessus ne sont pas exclus. Il crée aussi l'avantage de laisser une ventilation intégrale du téléviseur tout en lui donnant la possibilité d'adapter un décor quelconque et interchangeable pour l'ensemble extérieur. Il apporte également une protection supplémentaire à l'appareil.

Ces meubles ou habillages peuvent être réalisés en tous matériaux mais ils seront avantageusement réalisés en bois naturel, teinté, peint, patiné ou vernis.

# REVENDICATIONS

1.- Meuble d'habillage de postes de télévision caractérisé : en ce qu'il est composé de quatre panneaux à savoir : un panneau avant, deux panneaux latéraux et un panneau supérieur, le panneau avant étant conformé en lucarne pour laisser apparaître l'écran du téléviseur ;

2.- Meuble d'habillage selon la revendication 1, caractérisé : en ce qu'au moins la face avant comporte un motif décoratif ;

3.- Meuble d'habillage selon la revendication 1, caractérisé : en ce que la face avant comporte une seconde lucarne ;

4.- Meuble d'habillage selon la revendication 1, caractérisé : en ce que l'un des panneaux latéraux et supérieur comportent des ouvertures (7,8) pour permettre l'accès aux moyens de réglage ;

5.- Meuble d'habillage selon la revendication 1, caractérisé : en ce que les panneaux latéraux et supérieur (2,2',3) comportent des motifs décoratifs ;

6.- Meuble d'habillage selon la revendication 3, caractérisé : en ce que l'une au moins des lucarnes de la face avant comporte une porte ;

7.- Meuble d'habillage selon la revendication 6, caractérisé : en ce que ladite porte au moins comporte un évidement garni d'une toile de haut-parleur.

_Fig. 1_

_Fig. 2_

Office européen
des brévets

**RAPPORT DE RECHERCHE EUROPEENNE**

Numéro de la demande

EP 82 40 0842

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR - A - 1 489 194 (A. MEONI) <br><br> * page 2, colonne 1, lignes 6-12; 51-62; figures 1-5 * | 1-6 | A 47 B 81/06 <br> H 04 N 5/64 |
| X | US - A - 4 002 831 (E. AESCHLIMAN) <br><br> * colonne 2 , lignes 60-67; figures 1-3 * | 1,2 | |
| Y | US - A - 3 493 281 (G.H. KILE) <br><br> * figure 1; colonne 2, lignes 1-5 * | 1 | |
| A | US - A -.2 806 754 (M.J. ABELES et al.) <br><br> * figures 1 ,2 * | 1 ,2 | DOMAINES TECHNIQUES RECHERCHES (Int. Cl. ³) <br><br> A 47 B <br> H 04 N |
| A | FR - A - 1 487 423 (A. FAYE) | | |

Le présent rapport de recherche a ete établi pour toutes les revendications

| Lieu de la recherche | Date d'achèvement de la recherche | Examinateur |
|---|---|---|
| La Haye | 21-06-1982 | CURZI |